**Europäisches Patentamt**

**European Patent Office**

**Office européen des brevets**

(11) Numéro de publication: **0 270 403**
**B1**

(12) **FASCICULE DE BREVET EUROPEEN**

(45) Date de publication du fascicule du brevet:
**11.10.89**

(21) Numéro de dépôt: **87402429.2**

(22) Date de dépôt: **28.10.87**

(51) Int. Cl.⁴: **F02K 3/072, F02C 3/067**

(54) Moteur de propulsion à turbines de travail contrarotatives.

(30) Priorité: **29.10.86 FR 8615035**

(43) Date de publication de la demande:
**08.06.88 Bulletin 88/23**

(45) Mention de la délivrance du brevet:
**11.10.89 Bulletin 89/41**

(84) Etats contractants désignés:
**DE FR GB**

(56) Documents cités:
**FR-A- 2 535 394**
**GB-A- 1 084 184**
**GB-A- 1 319 849**
**GB-B- 585 342**
**US-A- 2 430 399**
**US-A- 2 546 420**
**US-A- 3 131 536**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Lardellier, Alan Marie Joseph, 1, rue Augereau, F-77000 Melun(FR)**

(74) Mandataire: **Moinat, François et al, S.N.E.C.M.A. Service des Brevets Boîte Postale 81, F-91003 Evry Cédex(FR)**

## Description

La présente invention concerne un moteur à turbine à gaz, destiné à la propulsion d'un avion, du genre comportant un générateur de gaz qui alimente deux turbines de travail lentes contrarotatives, imbriquées.

FR-A-2 535 394 décrit un moteur à turbine à gaz de ce type dans lequel les turbines de travail sont disposées en aval du générateur de gaz et sont entrainées directement par les gaz chauds sortant dudit générateur. Lesdites turbines entrainent directement sans réducteur, soit deux étages d'hélices contrarotatives, soit deux étages de soufflantes carénées par lesquelles est assurée la propulsion. Deux solutions de montage sont proposées. L'une prévoit de disposer les hélices ou les soufflantes à l'arrière du moteur, ce qui présente des inconvénients et des difficultés lors d'un montage sous les ailes d'un avion. L'autre prévoit de les disposer à l'avant du moteur, ce qui impose, pour l'entrainement, des arbres de liaison dont la mise en place comporte également des inconvénients.

FR-A-2 560 642 décrit un moteur à turbine à gaz du même type dans lequel un compresseur de gavage à contrarotation est associé aux soufflantes avant contrarotatives. Un dispositif de réglage du pas des aubes d'un étage de soufflante est adjoint, permettant d'obtenir une inversion du flux.

l'invention vise à réaliser un moteur à turbine à gaz du genre indiqué qui permette d'éviter les inconvénients des solutions connues.

Ces buts sont atteints par un moteur à turbine à gaz du genre précité caractérisé en ce que par rapport au sens de déplacement de l'avion, les gaz circulent dans le générateur de gaz à partir d'une chambre annulaire disposée à l'arrière, vers l'avant et audit générateur de gaz est associée une manche d'entrée d'air composée d'une multiplicité de canaux disposés circonférentiellement autour de l'enveloppe externe du moteur et débouchant dans ladite chambre et en ce que le sens de circulation des gaz chauds sortant dudit générateur de gaz est inversé pour repartir vers les turbines de travail de l'avant vers l'arrière de telle sorte que la disposition interne du moteur comporte en partant de l'avant vers l'arrière par rapport au sens de déplacement de l'avion propulsé, successivement :
- en superposition radiale partielle, les turbines contrarotatives imbriquées de travail et le conduit axial de sortie du générateur de gaz,
- les étages de turbine du générateur de gaz,
- la chambre de combustion,
- les étages de compression du générateur de gaz,
- la chambre annulaire d'entrée d'air du générateur de gaz.

Selon un premier mode de réalisation avantageux du moteur à turbine à gaz conforme à l'invention, les turbines de travail contrarotatives sont associées à deux étages d'hélices contrarotatives placées au même niveau longitudinal, le moteur constituant ainsi un turbopropulseur à hélices avant du type dit "propfan tracteur".

Avantageusement, le conduit de sortie des turbines de travail est reliée à une multiplicité de canaux assurant l'échappement des gaz du moteur à l'extérieur de l'enveloppe externe et disposés circonférentiellement autour de ladite enveloppe et intercalés entre les canaux d'entrée d'air.

Selon un second mode de réalisation avantageux du moteur à turbine à gaz conforme à l'invention, les turbines de travail contrarotatives sont associées à deux étages de soufflantes carénées placées au même niveau longitudinal, le moteur constituant ainsi une turbosoufflante avant du type dit "contrafan amont".

D'autres caractéristiques et avantages de l'invention ressortent de la description qui va suivre de deux modes de réalisation, en référence aux dessins annexés sur lesquels :

- la figure 1 représente en coupe longitudinale selon son axe de rotation une vue schématique d'un moteur à turbine à gaz conforme à l'invention et du type turbopropulseur avant ;
- la figure 2 de manière analogue représente en coupe longitudinale selon son axe de rotation une vue schématique d'un moteur à turbine à gaz conforme à l'invention et du type turbosoufflante avant.

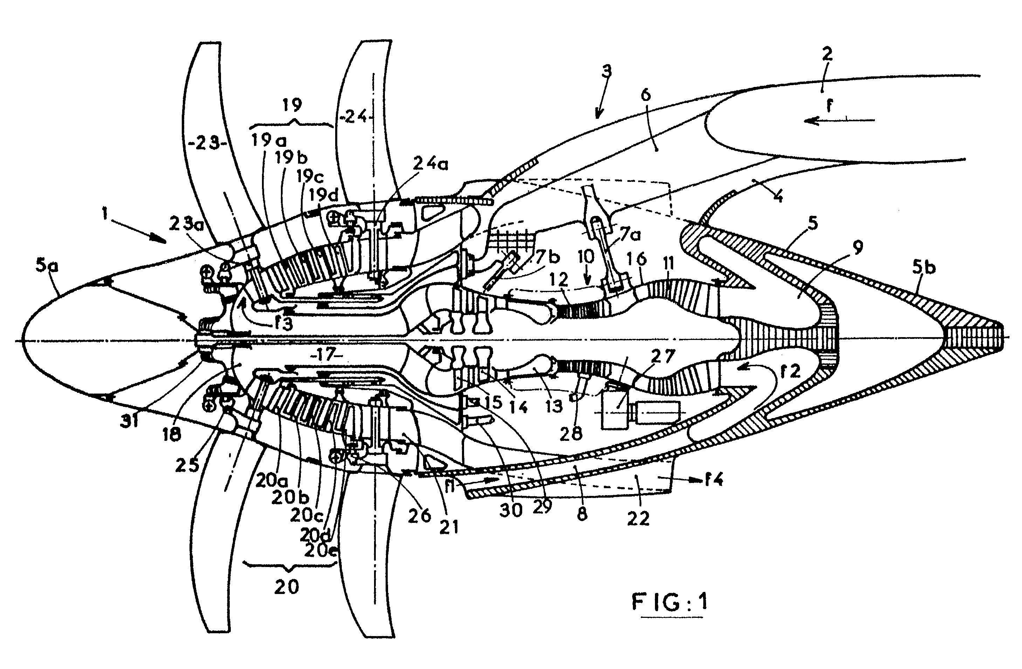

Sur la figure 1, qui représente une réalisation d'un turbopropulseur avant, le moteur à turbine à gaz 1 est relié à la structure de l'avion propulsé, représenté par une aile 2, par un mât-pylône 3 dont la structure 4 est solidaire de l'enveloppe externe 5 du moteur et qui comporte un pylône-support 6 auquel sont fixés des bras-support 7a et 7b. L'enveloppe externe 5 du moteur comporte une partie avant 5a et une partie arrière 5b de forme aérodynamiquement profilée, généralement conique. Avant et arrière sont définis par rapport au sens de déplacement de l'avion propulsé selon la flèche f indiquée sur la partie avion. Sur ladite enveloppe externe 5 du moteur sont disposés circonférentiellement une multiplicité de canaux 8 formant une manche d'entrée d'air et débouchant dans une première chambre annulaire 9 de tranquillisation. Dans les canaux 8, l'air circule de l'avant vers l'arrière et à partir de la chambre 9 l'air subit une première inversion de sens de circulation pour circuler de l'arrière vers l'avant en entrant dans un générateur de gaz 10 qui comporte les éléments connus et classiques mais disposés successivement de manière particulière à la présente invention en partant de l'arrière vers l'avant : un compresseur axial multiétagé 11 à basse pression, puis un compresseur axial multiétagé 12 à haute pression d'où l'air comprimé passe dans une chambre de combustion annulaire 13 qui alimente en gaz chauds les turbines d'entrainement des compresseurs, respectivement à haute pression 14 et à basse pression 15. Le générateur de gaz 10 ainsi constitué est supporté et relié au pylône-support 6 par les bras-supports 7a et 7b fixés à l'enveloppe externe 16 du générateur de gaz au niveau du carter de compresseur, ce qui présente l'avantage de disposer les points de fixation en zone froide. Le générateur de gaz 10 est prolongé vers l'avant par un conduit axial 17 de sortie des gaz qui les achemine à une seconde chambre annulaire 18 à partir de laquelle les gaz subissent une seconde inversion du sens de circulation pour circuler de l'avant vers l'arrière en entrant dans les étages de turbines de travail disposées en superposition radiale externe audit conduit 17. Un premier rotor de turbine 19 comporte plusieurs étages d'aubes 19a,19b,19c,19d, dont les bases sont fixées du côté radialement interne et un second rotor de turbine 20 comporte plusieurs étages d'aubes 20a,20b,20c,20d et 20e dont les bases sont fixées du côté radialement externe et les différents étages successifs des deux rotors de turbines 19 et 20 sont successivement imbriqués l'un par rapport à l'autre. En arrière des turbines de travail 19 et 20, le conduit annulaire 21 de sortie des gaz se raccorde à une multiplicité de canaux 22 qui débouchent à l'extérieur de l'enveloppe externe du moteur autour de laquelle ils sont disposés circonférentiellement, intercalés entre les canaux 8 d'entrée d'air. Les flèches fl,f2,,f3 et f4 représentent la circulation des gaz dans le moteur, respectivement l'entrée, l'arrivée au générateur de gaz, l'arrivée aux turbines de travail et l'éjection, f2 et f3 représentant les deux inversions du sens de circulation. Au niveau des turbines de travail 19 et 20 et à l'extérieur de l'enveloppe 5 du moteur sont disposées les pales, respectivement 23 et 24 de deux étages d'hélices longitudinalement espacées. Les pieds 23a des pales 23 constituant l'étage avant sont solidarisés à la structure de la turbine 20 tandis que les pieds 24a des pales 24 constituant l'étage arrière sont solidarisés à la structure de la turbine 19. Les rotors de turbine 19 et 20 étant contrarotatifs entraînent ainsi les hélices 23 et 24 également en contrarotation. A chaque étage d'hélice 23 et 24 est adjoint un dispositif, respectivement 25 et 26, qui commande le calage variable et l'inversion de pas des hélices. Quelques dispositions complémentaires ont été représentées. A l'extérieur de l'enveloppe 16 du générateur de gaz et à la partie inférieure est disposé un carter d'accessoires 27 comportant la liaison cinématique de prise de mouvement. Une ventilation des paliers du moteur est assurée à partir d'un prélèvement d'air au compresseur haute-pression 11, figuré par un tube 28, relié à des tubes 29 et 30. Un distributeur d'huile 31 permet d'acheminer l'huile nécessaire à la commande de pas du rotor amont.

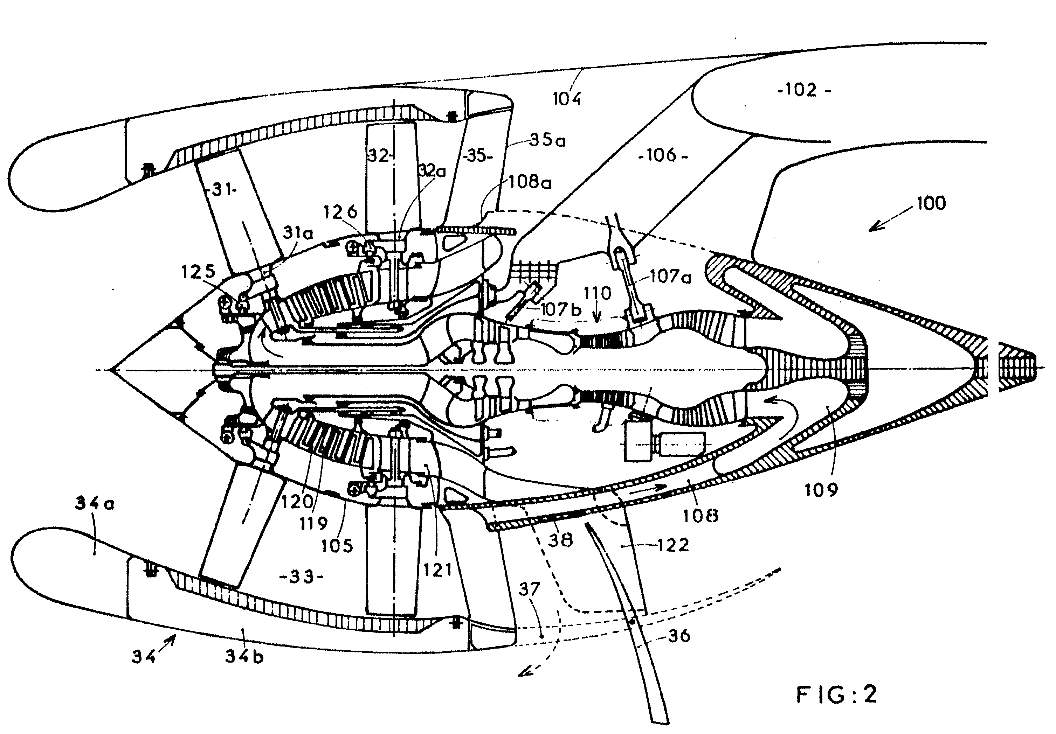

Un second mode de réalisation d'un moteur à turbine à gaz conforme à l'invention qui est du type turbosoufflante avant est représenté à la figure 2. Les éléments identiques à ceux qui entrent dans la réalisation selon la figure 1 ont été conservés sur la figure 2 en leur affectant des repères obtenus en ajoutant 100 à leur numérotation selon la figure 1. La liaison du moteur à turbine à gaz 100 à la structure de l'avion propulsé conserve la structure identique de pylône-support 106 et de bras-supports 107a et 107b. Le générateur de gaz 110 est également conservé identique ainsi que les deux turbines de travail imbriquées et contrarotatives 119 et 120. Par contre à la place des deux hélices 23 et 24 sont montés deux étages de soufflante 31 et 32, les liaisons des pieds 31a et 32a des pales de soufflante aux structures de turbines 119 et 120 étant conservées. En conséquence, les deux étages de soufflante 31 et 32 sont également contrarotatifs. A partir de l'entrée d'air par les canaux 108, l'admission dans le générateur de gaz 110 à partir de la chambre 109, jusqu'au canal de sortie 121 annulaire des turbines de travail 119 et 120, le circuit des gaz dans le moteur est identique à celui qui est obtenu dans le précédent mode de réalisation décrit en référence à la figure 1. Par contre, l'enveloppe externe 105 du moteur constitue maintenant la paroi interne d'un canal annulaire 33 de soufflante dont la paroi externe est constituée par une enveloppe externe 34 de canal de soufflante comportant un bord d'admission amont 34a et une partie centrale 34b. Cette enveloppe 34 de canal de soufflante est supportée par des bras profilés 35 disposés radialement à travers le canal 33 de soufflante, en aval des étages rotatifs 31 et 32 de soufflante et qui la relient à l'enveloppe 105 du moteur. Comme précédemment, les pieds 31a et 32a de pales de soufflantes peuvent être reliés à des dispositifs 125 et 126 de commande de calage variable. La partie supérieure de la figure 2 représente une demi-vue en coupe longitudinale d'une variante de turbosoufflante selon l'invention dans laquelle l'enveloppe 34 de canal de soufflante est prolongée vers l'aval par une structure de liaison aérodynamique 104 à la partie support 102 de l'avion. Dans ce cas, à la sortie du conduit 121 de sortie des turbines de travail 119 et 120, les gaz chauds sont évacués par l'intérieur des bras 35, à travers leur bord de fuite 35a, en aval des entrées d'air, à l'extrémité avant 108a des canaux 108.

La partie inférieure de la figure 2 représente une demi-vue en coupe longitudinale d'une variante de turbosoufflante selon l'invention comportant un système de réverses par inversion du flux secondaire circulant dans le canal de soufflante 33. Dans ce cas, au-delà des bras 35, l'enveloppe 34 de canal de soufflante est prolongée vers l'aval par une couronne annulaire de volets pivotants 36 qui sont susceptibles de pivoter pour venir obturer vers l'arrière la partie aval du canal 33 en dégageant des passages latéraux d'éjection 37. L'entrée d'air dans les canaux 108 peut être améliorée en prévoyant des ouïes latérales 38 sur la paroi des canaux. Le canal 121 de sortie des turbines de travail peut également être prolongé vers l'arrière de manière à communiquer, par des bouches de sortie 122 intercalées entre les canaux d'entrée 108, avec la partie aval du canal de soufflante 33, au-delà des bras profilés 35.

Aux avantages déjà notés procurés par l'invention, en particulier de simplification par la suppression de tout réducteur et en facilitant le montage sur avion propulsé en disposant hélices ou soufflantes à l'avant sans que cela impose des transmissions longitudinales par arbres de grande longueur et superposés radialement, le principe de circuit des gaz comportant une double inversion de sens de circulation procure grâce à l'invention d'autres avantages, et en particulier :

- une protection améliorée du générateur de gaz vis à vis des ingestions diverses, en particulier d'oiseaux, alors que les entrées d'air selon l'invention sont protégées ;

- les inconvénients du sillage sur les hélices observé dans les solutions d'hélices arrière sont évités.

## Revendications

1. - Moteur à turbine à gaz destiné à la propulsion d'un avion du genre comportant un générateur de gaz qui alimente deux turbines de travail lentes contrarotatives caractérisé en ce que, par rapport au sens de déplacement de l'avion, les gaz circulent dans le générateur de gaz (10 ; 110) à partir d'une chambre annulaire (9 ; 109) disposée à l'arrière, vers l'avant et audit générateur de gaz (10 ; 110) est associée une manche d'entrée d'air composée d'une multiplicité de canaux (8 ; 108) disposés circonférentiellement autour de l'enveloppe externe (5 ; 105) du moteur (1 ; 100) et débouchant dans ladite chambre (9 ; 109) et en ce que le sens de circulation des gaz chauds sortant dudit générateur de gaz (10 ; 110) est inversé pour passer dans les turbines de travail (19,20 ; 119,120) en circulant de l'avant vers l'arrière de telle sorte que la disposition interne du moteur comporte en partant de l'avant vers l'arrière, avant et arrière étant définis par rapport au sens de déplacement de l'avion propulsé et successivement :
- les turbines de travail (19,20 ; 119,120) contrarotatives imbriquées et en superposition radiale, le conduit axial de sortie (17) du générateur de gaz ,
- les étages de turbine (15,14) du générateur de gaz,
- la chambre de combustion (13),
- les étages de compression (12,11) du générateur de gaz,
- la chambre annulaire (9 ; 109) d'entrée d'air du générateur de gaz,

2. - Moteur de propulsion selon la revendication 1 caractérisé en ce que les turbines de travail (19,20) contrarotatives sont associées à deux étages d'hélices contrarotatives (23,24) placées au même niveau longitudinal, ledit moteur constituant ainsi un turbopropulseur à hélices avant du type dit "propfan tracteur".

3. - Moteur de propulsion selon la revendication 2 caractérisé en ce que le conduit de sortie (21) des turbines de travail (19,20) est relié à une multiplicité de canaux (22) assurant l'échappement des gaz du moteur à l'extérieur de l'enveloppe externe (105) et disposés circonférentiellemnt autour de ladite enveloppe (105), intercalés entre les canaux (8) d'entrée d'air.

4. - Moteur de propulsion selon la revendication 1 caractérisé en ce que les turbines de travail (119,120) contrarotatives sont associées à deux étages de soufflantes (31,32) placées au même niveau longitudinal et qu'elles entrainent en rotation dans un canal annulaire (33) limité par une paroi interne constituée par l'enveloppe (105) du moteur et par une enveloppe externe (34) de canal de soufflante supportée par des bras profilés (35) fixés à ladite enveloppe de moteur (105), le moteur constituant ainsi une turbosoufflante avant du type dit "contrafan amont".

5. - Moteur de propulsion selon la revendication 4 caractérisé en ce que le conduit de sortie (121) des turbines de travail (119,120) est raccordé aux bras profilés (35) de telle sorte que les gaz d'éjection sont évacués par les bords de fuite (35a) desdits bras (35), en aval des extrémités avant (108a) des canaux d'entrée d'air (108).

6. - Moteur de propulsion selon la revendication 4 caractérisé en ce que l'enveloppe externe (34) de canal de soufflante est prolongée vers l'arrière, au-delà des bras profilés (35) par une couronne annulaire de volets (36) susceptibles de pivoter pour obturer le canal de soufflante (33) à l'arrière et dégager des passages latéraux (37) d'éjection des gaz de manière à obtenir une inversion du flux de poussée.

7. - Moteur de propulsion selon la revendication 6 caractérisé en ce que le conduit de sortie (121) des turbines de travail (119,120) est raccordé à des bouches de sortie (122) traversant l'enveloppe de moteur (105) et intercalées entre les canaux d'entrée d'air (108).

8. - Moteur de propulsion selon l'une des revendications 6 ou 7 caractérisé en ce que les canaux d'entrée d'air (108) comportent des ouïes (38) complémentaires d'admission.

## Claims

1. Gas turbine engine designed for the propulsion of an aircraft of the type comprising a gas generator which supplies two slow counter-rotating turbine stages characterised in the fact that, in relation to the direction of travel of the aircraft, the gases circulate in the gas generator (10; 110) from an annular chamber (9; 109) arranged at the rear of the engine, towards the front and with the said gas generator (10; 110) is associated an air intake duct composed of a multiplicity of channels (8; 108) arranged circumferentially around the outer casing (5; 105) of the engine (1; 100) and opening into the said chamber (9; 109) and in that the direction of flow of the hot gases emerging from the said gas generator (10; 110) is reversed in order to pass through the power turbines (19, 20; 119, 120) and circulates from the front of the engine to the rear in such a way that the internal layout of the engine, starting from the front and proceeding towards the rear, front and rear being defined in relation to the direction of travel of the aircraft, comprises successively:
- the power turbines (19, 20; 119, 120), counter-rotating, interspaced and radially superimposed, the axial output duct (17) from the gas generator,
- the turbine stages (15, 14) of the gas generator,
- the combustion chamber (13),
- the compressor stages (12, 11) of the gas generator,
- the annular air intake chamber (9; 109) of the gas generator.

2. Propulsion engine in accordance with Claim 1 characterised in that the counter-rotating power turbines (19, 20) are associated with two stages of counter-rotating blades (23, 24) placed at the same longitudinal point, the said engine constituting a turbo-prop engine of the type known as a "tractor turbofan".

3. Propulsion engine in accordance with Claim 2 characterised in that the output duct (21) from the power turbines (19, 20) is connected to a multiplicity of channels (22) which ensure the escape of the exhaust gases to the outside of the outer casing (105) and arranged circumferentially around the said casing (105), alternately with the air intake channels (8).

4. Propulsion engine in accordance with Claim 1 characterised in that the counter-rotating power turbines (119, 120) are associated with two stages of fan blades (31, 32) placed in the same longitudinal position and which are caused to rotate in an annular duct (33) described by an inner surface constituted by the engine casing (105) and an outer cowling (34) supported radially by aerofoil struts (35) fixed to the engine casing (105), the engine constituting a turbofan of the type known as "forward-mounted contra-fan".

5. Propulsion engine in accordance with Claim 4 characterised in that the outlet duct (121) from the power turbines (119, 120) is connected to the aerofoil struts (35) in such a way that the exhaust gases are ejected along the trailing edges (35a) of the said struts (35), downstream of the front ends (108a) of the air intake channels (108).

6. Propulsion engine in accordance with Claim 4 characterised in that the outer casing (34) of the propulsion fan duct is extended towards the rear, beyond the aerofoil struts (35) by a ring of annular flaps (36) capable of being pivoted so as to obstruct the rear part of the fan duct (33) and to open lateral paths (37) for the escape of the gases in such a way as to obtain reverse thrust.

7. Propulsion engine in accordance with Claim 6 characterised in that the outlet duct (121) of the power turbines (119, 120) is connected to outlets (122) passing through the engine casing (105) and interspaced between the air intake channels (108)

8. Propulsion engine in accordance with either of the Claims 6 or 7 characterised in that the air intake channels (108) comprise supplementary air intakes (38).

## Patentansprüche

1. Gasturbinentriebwerk für den Antrieb eines Flugzeugs mit einem Gasgenerator, der zwei langsame gegenläufige Arbeitsturbinen speist, dadurch gekennzeichnet, daß die Gase, bezogen auf die Bewegungsrichtung des Flugzeugs, in dem Gasgenerator (10; 110) von einer rückseitig angeordneten ringförmigen Kammer (9; 109) nach vorn zirkulieren und dem Gasgenerator (10; 110) eine Lufteintrittshaube zugeordnet ist, die aus einer Vielzahl von Kanälen (8; 108) zusammengesetzt ist, die am Umfang um die äußere Hülle (5; 105) des Triebwerks (1; 100) angeordnet sind und in der genannten Kammer (9; 109) münden, und daß die Zirkulationsrichtung der aus dem genannten Gasgenerator (10; 110) austretenden heißen Gase derart invertiert ist, daß sie in die Arbeitsturbinen (19, 20; 119, 120) gelangen, indem sie, bezogen auf die Bewegungsrichtung des angetriebenen Flugzeugs von vorn nach hinten zirkulieren, derart daß die innere Anordnung des Triebwerks von vorn nach hinten aufeinanderfolgend folgende Teile aufweist:
– die gegenläufigen Arbeitsturbinen (19, 20; 119, 120), die verschachtelt und der axialen Ausgangsleitung (17) des Gasgenerators radial überlagert sind,
– die Turbinenstufen (14, 15) des Gasgenerators,
– die Brennkammer (13),
– die Verdichterstufen (12, 11) des Gasgenerators,
– die ringförmige Lufteintrittskammer (9; 109) des Gasgenerators.

2. Triebwerk nach Anspruch 1, dadurch gekennzeichnet, daß die gegenläufigen Arbeitsturbinen (19, 20) zwei gegenläufigen Propellerstufen (23, 24) zugeordnet sind, die auf demselben longitudinalen Niveau angeordnet sind, so daß das Triebwerk ein Propellerturbinentriebwerk der als "Propfan mit Zugwirkung" bezeichneten Bauart darstellt.

3. Triebwerk nach Anspruch 2, dadurch gekennzeichnet, daß die Ausgangsleitung (21) der Arbeitsturbinen (19, 20) mit einer Mehrzahl von Kanälen (22) verbunden ist, die den Ausstoß der Motorgase aus der äußeren Hülle (105) nach außen ermöglichen und in Umfangsrichtung um diese Hülle herum und versetzt zwischen den Lufteintrittskanälen (8) angeordnet sind.

4. Triebwerk nach Anspruch 1, dadurch gekennzeichnet, daß die gegenläufigen Arbeitsturbinen (119, 120) zwei Gebläsestufen (31, 32) zugeordnet sind, die auf demselben longitudinalen Niveau angeordnet sind und die sie in einem ringförmigen Kanal (33) mit einer Drehbewegung beaufschlagen, der von einer von der Verkleidung (105) des Motors gebildeten Innenwandung und von einer äußeren Verkleidung (34) des Gebläsekanals begrenzt ist, die von als Profilteile ausgebildeten Armen (35) gehalten ist, die an der genannten Verkleidung (105) des Motors befestigt sind, wobei der Motor somit ein vorderes Turbogebläse der Bauart mit "stromaufwärtigem gegenläufigen Gebläse" darstellt.

5. Triebwerk nach Anspruch 4, dadurch gekennzeichnet, daß die Ausgangsleitung (121) der Arbeitsturbinen (119, 120) mit den als Profilteilen ausgebildeten Armen (35) derart verbunden ist, daß die Auspuffgase von den Hinterkanten (35a) der genannten Arme (35) stromabwärts der vorderen Enden (108a) der Lufteintrittskanäle (108) abgesaugt werden.

6. Triebwerk nach Anspruch 4, dadurch gekennzeichnet, daß die äußere Verkleidung (34) des Gebläsekanals nach hinten jenseits der profilierten Arme (35) von einem ringförmigen Kranz von Klappen (36) verlängert wird, die derart verschwenkbar sind, daß sie den Gebläsekanal (33) nach hinten verschließen und seitliche Gasauspuffdurchgänge (37) freigeben können, wodurch eine Umkehr der Schubströmung erreicht wird.

7. Triebwerk nach Anspruch 6, dadurch gekennzeichnet, daß die Ausgangsleitung (121) der Arbeitsturbinen (119, 120) mit Auslaßöffnungen (122) verbunden ist, die die Motorverkleidung (105) durchdringen und versetzt zwischen den Lufteintrittskanälen (108) angeordnet sind.

8. Triebwerk nach einem der Ansprüche 6 oder 7, dadurch gekennzeichnet, daß die Lufteintrittskanäle (108) komplementäre Ansaugöffnungen (38) aufweisen.

FIG:1

EP 0 270 403 B1

FIG:2